# EUROPÄISCHE PATENTSCHRIFT

(11) **EP 3 066 912 B1**
(45) Veröffentlichungstag und Bekanntmachung des Hinweises auf die Patenterteilung: **06.06.2018**
(21) Anmeldenummer: 16163001.7
(22) Anmeldetag: 23.09.2014
(51) Int. Cl.: A01D 78/10, A01D 80/00

(54) **KREISELSCHWADER**
ROTARY RAKE
ANDAINEUSE ROTATIVE

(30) Priorität: 24.09.2013 DE 102013110558
(43) Veröffentlichungstag der Anmeldung: 14.09.2016
(62) Teilanmeldung aus: 14185943.9
(73) Patentinhaber: CLAAS Saulgau GmbH, 88348 Bad Saulgau (DE)
(72) Erfinder: Speer, Christian, 88348 Bad Saulgau (DE)

(56) Entgegenhaltungen:
- EP-B1- 1 190 614
- DE-A1-102009 032 437
- DE-A1-102010 010 861
- DE-A1-102011 117 258

## Beschreibung

Die Erfindung betrifft einen Kreiselschwader nach dem Oberbegriff des Anspruchs 1. Des Weiteren betrifft die Erfindung ein Verfahren zum Betreiben eines solchen Kreiselschwaders.

Kreiselschwader verfügen über wenigstens einen Schwadkreisel, der mittels eines Fahrwerks in seinem Betriebszustand auf einem zu bearbeitenden Boden bzw. Untergrund, auf welchem sich gemähtes und über den Kreisschwader zu schwadendes Erntegut befindet, abgestützt ist. Jeder Schwadkreisel eines Kreiselschwaders umfasst einen umlaufenden, um eine Hochachse angetriebenen und mit gesteuerten Zinkenarmen und Rechzinken bestückten Rechkreisel, wobei die Zinkenarme des Rechkreisels von einer Kurvenbahn über Rollenhebel gesteuert sind. Typischerweise ist der Rechkreisel eines Schwadkreisels über ein Winkelgetriebe antreibbar.

Im Allgemeinen sorgen die Laufräder des Fahrwerks des Kreiselschwaders, die sich unterhalb des oder jedes Schwadkreisels befinden, für die Bodenanpassung der Rechzinken. Ein Abstand zwischen den Rechzinken und dem Boden während des Rechvorgangs soll möglichst konstant sein.

Aus dem Stand der Technik ist es bereits bekannt, zur Verbesserung der Bodenanpassung der Rechzinken der Schwadkreisel die sogenannte Kreiselhöhe der Rechkreisel der Schwadkreisel einzustellen. So ist es aus der EP 1 190 613 B1 sowie aus der EP 1 190 614 B1 bekannt, über eine Messvorrichtung die in Fahrtrichtung eines Kreiselschwaders gesehen vor dem Kreiselschwader liegende Bodenfläche zu erfassen, um abhängig von der zu bearbeitenden Bodenoberfläche, zum Beispiel abhängig von Bodenunebenheiten, die Kreiselhöhe eines Schwadkreisels eines Kreiselschwaders anzupassen.

Aus dem Stand der Technik ist es demnach bekannt, Bodenunebenheiten eines zu bearbeitenden Bodens dadurch auszugleichen, dass die Kreiselhöhe des oder jedes Schwadkreisels eines Kreiselschwaders angepasst wird. Hiermit kann vermieden werden, dass bei einer zu geringen Kreiselhöhe, also bei einem zu geringen Abstand der Rechzinken vom zu bearbeitenden Boden, das zu schwadende Erntegut verunreinigt wird, oder dass bei einer zu hohen Kreiselhöhe, also bei einem zu großen Abstand der Rechzinken vom zu bearbeitenden Boden, Erntegut von den Rechzinken nicht erfasst wird und daher nicht auf den oder jeden zu bildenden Schwad gelangt.

Hiervon ausgehend liegt der vorliegenden Erfindung die Aufgabe zugrunde, einen neuartigen Kreiselschwader sowie eine Steuerungseinrichtung für einen solchen Kreiselschwader und ein Verfahren zum Betreiben eines solchen Kreiselschwaders zu schaffen.

Diese Aufgabe wird durch einen Kreiselschwader nach Anspruch 1 gelöst. Hiernach stellt die Steuerungseinrichtung die Kreiselhöhe des oder jedes Schwadkreisels abhängig von Schwingungen der Rechzinken im Betrieb automatisch ein.

Nach einem weiteren Aspekt der Erfindung stellt die Steuerungseinrichtung die Kreiselhöhe des oder jedes Schwadkreisels im Betrieb automatisch abhängig von der im Betrieb zu mindestens einem Schwad zusammengelegten Erntemasse ein.

Nach einem weiteren Aspekt der Erfindung stellt die Steuerungseinrichtung die Kreiselhöhe des oder jedes Schwadkreisels im Betrieb automatisch abhängig von einer Fortbewegungsgeschwindigkeit des Kreiselschwaders ein.

Mit allen drei erfindungsgemäßen Aspekten, die entweder alleine für sich oder in Kombination von zwei Aspekten oder auch in Kombination aller drei Aspekte an einem Kreiselschwader zum Einsatz kommen können, kann die Arbeitsqualität eines Kreiselschwaders weiter verbessert werden.

So wird erfindungsgemäß vorgeschlagen, abhängig von der im Betrieb zu mindestens einem Schwad zusammengelegten Erntemasse und/oder abhängig von der Fortbewegungsgeschwindigkeit des Kreiselschwaders und/oder abhängig von Schwingungen der Rechzinken des Kreiselschwaders die Kreiselhöhe der Schwadkreisel bzw. der Rechkreisel des Kreiselschwaders im Betrieb automatisch anzupassen. Hierdurch kann eine auf die obigen Betriebsparameter des Kreiselschwaders optimal angepasste Kreiselhöhe automatisch gewählt werden, wodurch die Arbeitsqualität des Kreiselschwaders weiter gesteigert werden kann.

So kann mit der Erfindung einerseits vermieden werden, dass infolge einer zu geringen Kreiselhöhe das zusammenzulegende Erntegut verunreinigt wird, und dass andererseits aufgrund einer zu hohen Kreiselhöhe Erntegut von den Rechzinken bei der Schwadbildung nicht erfasst wird.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

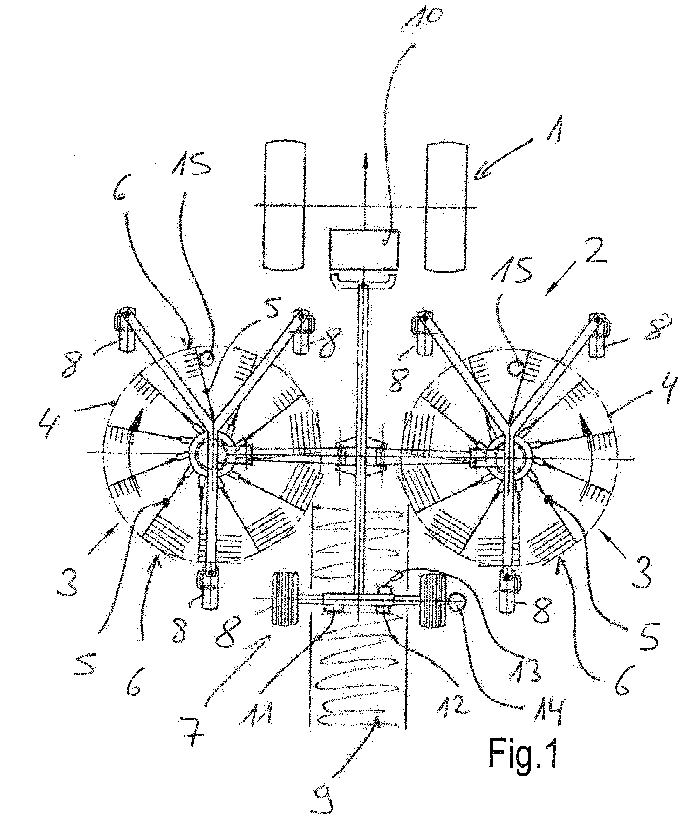

- Fig. 1: eine schematisierte Draufsicht auf einen erfindungsgemäßen Kreisel-schwader.

Fig. 1 zeigt ein exemplarisches Ausführungsbeispiel eines von einem Zugfahrzeug 1 gezogenen Kreiselschwaders 2, wobei der Kreiselschwader 2 im gezeigten Ausführungsbeispiel zwei Schwadkreisel 3 umfasst.

Jeder Schwadkreisel 3 umfasst einen Rechkreisel 4 aus mehreren Zinkenarmen 5, wobei an jedem Zinkenarm 5 mehrere Rechzinken 6 gelagert sind.

Die Schwadkreisel 3 des Kreiselschwaders 2 sind an einem Fahrgestell 7 gelagert, wobei das Fahrgestell 7 mehrere Laufräder 8 umfasst, mit Hilfe derer der Kreiselschwader 2 auf einem zu bearbeitenden Boden aufsteht bzw. über die der Kreiselschwader 2 über den zu bearbeitenden Boden mit Hilfe des Zugfahrzeugs 1 gezogen werden kann.

Im gezeigten Ausführungsbeispiel der Fig. 1 umfasst der Kreiselschwader 2 zwei Schwadkreisel 3, die Erntegut von einem Boden über die Rechzinken 6 erfassen und das erfasste Erntegut zu einem Schwad 9 zusammenlegen.

Die Anzahl der Schwadkreisel kann von dem in Fig. 1 gezeigten Ausführungsbeispiel des Kreiselschwaders 2 abweichen. So kann der Kreiselschwader einen einzigen Schwadkreisel oder mehr als zwei Schwadkreisel umfassen.

Jeder Schwadkreisel 3 bzw. jeder Rechkreisel 4 des Kreiselschwaders 2 umfasst eine im Detail nicht gezeigte Verstelleinrichtung, mit Hilfe derer im Betrieb eine sogenannte Kreiselhöhe des jeweiligen Schwadkreisels 3 eingestellt werden kann, um im Betrieb den Abstand der Rechzinken 6 zum Boden einzustellen. Die Verstelleinrichtungen der Schwadkreisel 3 werden dabei von einer Steuerungseinrichtung 10 des Kreiselschwaders 2 angesteuert.

Nach einem Aspekt der Erfindung stellt die Steuerungseinrichtung 10 die Kreiselhöhe jedes in Fig. 1 gezeigten Schwadkreisels 3 abhängig von der im Betrieb zu dem Schwad 9 zusammenzulegenden bzw. zusammengelegten Erntemasse automatisch ein.

So umfasst im gezeigten Ausführungsbeispiel der Kreiselschwader 2 einen vorzugsweise als Winkelsensor ausgebildeten Sensor 11 zur Bestimmung einer Schwadbreite des von dem Kreiselschwader 2 im Betrieb gebildeten Schwads 9 sowie einen vorzugsweise als Ultraschallsensor 12 ausgebildeten Sensor zur Bestimmung einer Schwadhöhe des gebildeten Schwads 9. Abhängig von den Messsignalen der Sensoren 11 und 12, also abhängig von der messtechnisch erfassten Schwadbreite des Schwads 9 und der messtechnisch erfassten Schwadhöhe des Schwads 9, kann die Steuerungseinrichtung 10 einen Schwadquerschnitt des Schwads 9 bestimmen. Ferner umfasst der Kreiselschwader 2 einen Sensor 13 zur Bestimmung der Feuchtigkeit des Ernteguts. Auf Basis des bestimmten Schwadquerschnitts sowie auf Basis der bestimmten Feuchtigkeit des Ernteguts ermittelt dann die Steuerungseinrichtung 10 die zum Schwad 9 zusammengelegte Erntemasse, um dann abhängig von der Erntemasse die Kreiselhöhe des oder jedes Schwadkreisels 9 im Betrieb automatisch einzustellen.

Hierzu ist in der Steuerungseinrichtung 10 mindestens ein Kennfeld hinterlegt, um auf Basis der zusammengelegten Erntemasse im Betrieb die Kreiselhöhe des oder jedes Schwadkreisels 3 automatisch einzustellen.

Dabei kann vorgesehen sein, aus der messtechnisch erfassten Schwadbreite, aus der messtechnisch erfassten Schwadhöhe und aus der messtechnisch erfassten Feuchtigkeit des Ernteguts zunächst rechnerisch die Erntemasse zu bestimmen und diese rechnerisch bestimmte Erntemasse als Eingangsgröße für ein Kennfeld zu verwenden, um auf Basis des Kennfelds die Kreiselhöhe des oder jedes Schwadkreisels 3 automatisch anzupassen.

Im Unterschied hierzu ist es jedoch auch möglich, die messtechnisch erfasste Schwadbreite, die messtechnisch erfasste Schwadhöhe sowie die messtechnisch erfasste Feuchtigkeit des Ernteguts als individuelle Eingangsgrößen eines oder mehrerer Kennfelder zu verwenden, und auf Basis des oder jedes Kennfelds die Kreiselhöhe des oder jedes Schwadkreisels 3 automatisch einzustellen.

Die Steuerungseinrichtung 10 verändert die Kreiselhöhe des oder jedes Schwadkreisels 3 derart, dass mit zunehmender Erntemasse, also mit zunehmender Schwadbreite und/oder zunehmender Schwadhöhe und/oder zunehmender Feuchtigkeit, die Kreiselhöhe verringert wird, um also den Abstand der Rechzinken 6 zum Boden zu verringern.

Mit diesem Aspekt der Erfindung wird demnach an einem Kreiselschwader 2 die Kreiselhöhe des oder jedes Schwadkreisels 3 bzw. des oder jedes Rechkreisels 4 des Kreiselschwaders 2 automatisch im Betrieb abhängig von der zu dem Schwad 9 zusammenzulegenden bzw. zusammengelegten Erntemasse bestimmt und eingestellt. Dabei wird im Betrieb die zusammengelegte Erntemasse des Schwads 9 mit Hilfe von Sensoren 11, 12, 13 automatisch bestimmt, nämlich im gezeigten Ausführungsbeispiel mit Hilfe eines als Winkelsensor ausgebildeten Sensors 11 zur Ermittlung der Schwadbreite des Schwads 9, mit Hilfe eines als Ultraschallsensor ausgebildeten Sensors 12 zur Ermittlung der Schwadhöhe des Schwads 9 sowie mit Hilfe eines Feuchtigkeitssensors 13 zur Ermittlung der Feuchtigkeit des zu dem Schwad 9 zusammengelegten Ernteguts.

Zusätzlich oder alternativ kann vorgesehen sein, dass die Steuerungseinrichtung 10 die Kreiselhöhe des oder jedes Schwadkreisels 3 und damit die Kreiselhöhe des oder jedes Rechkreisels 4 automatisch im Betrieb abhängig von einer Fortbewegungsgeschwindigkeit des Kreiselschwaders 2 einstellt, wobei gemäß Fig. 1 einem Laufrad 8 des Fahrgestells 7 ein Sensor 14 zugeordnet ist, mit Hilfe dessen die Drehzahl des Laufrads 8 und abhängig von der Drehzahl die Fortbewegungsgeschwindigkeit des Kreiselschwaders 2 im Betrieb ermittelt werden kann.

Dabei verstellt die Steuerungseinrichtung 10 die Kreiselhöhe des oder jedes Schwadkreisels 3 abhängig von einem entsprechenden Kennfeld derart, dass mit zunehmender Fortbewegungsgeschwindigkeit des Kreiselschwaders 2 die Kreiselhöhe verringert wird, dass also der Abstand der Rechzinken 6 zum zu bearbeitenden Boden umso geringer ist, je höher die Fortbewegungsgeschwindigkeit des Kreiselschwaders 2 ist.

Die Fortbewegungsgeschwindigkeit des Kreiselschwaders 2 kann der Steuerungseinrichtung 10 auch vom Zugfahrzeug 1 bereitgestellt werden.

Zusätzlich oder alternativ kann vorgesehen sein, dass die Steuerungseinrichtung 10 die Kreiselhöhe des oder jedes Schwadkreisels 3 abhängig von Schwingungen der Rechzinken 6 im Betrieb automatisch einstellt. So ist im gezeigten Ausführungsbeispiel im Bereich jedes Schwadkreisels 3 ein Sensor 15 verbaut, mit Hilfe dessen die Schwingungen der Rechzinken 6 des jeweiligen Schwadkreisels 3 im Betrieb messtechnisch erfasst werden können. So ist gemäß Fig. 1 einem Zinkenarm 5 des jeweiligen Schwadkreisels 3 ein als Klopfsensor ausgebildeter Schwingungssensor 15 zugeordnet, um so an jedem Schwadkreisel 3 individuell die Schwingungen der Rechzinken 6 zu ermitteln. Abhängig von der Schwingung der Rechzinken 6 stellt dann die Steuerungseinrichtung 10 die Kreiselhöhe des jeweiligen Schwadkreisels 3 im Betrieb automatisch ein.

Die Steuerungseinrichtung 10 verstellt dabei abhängig von der Schwingung der Rechzinken 6 und von einem entsprechenden Kennfeld die Kreiselhöhe derart, dass mit zunehmenden Schwingungen der Rechzinken 6 die Kreiselhöhe des jeweiligen Schwadkreisels 3 erhöht wird, dass also mit zunehmenden Schwingungen der Rechzinken 6 der Abstand derselben zum Boden vergrößert wird.

Während abhängig von der Erntemasse und/oder abhängig von der Fortbewegungsgeschwindigkeit die Kreiselhöhe an allen Schwadkreiseln 3 gleichförmig verstellt wird, kann bei der schwingungsabhängigen Einstellung der Kreiselhöhe an jedem Schwadkreisel 3 eine individuelle Einstellung der Kreiselhöhe abhängig von der jeweiligen Schwingung der jeweiligen Rechzinken des jeweiligen Schwadkreisels 3 erfolgen.

Der erfindungsgemäße Kreiselschwader 2 kann ein verbessertes Arbeitsergebnis bereitstellen. Die Kreiselhöhe des oder jedes Schwadkreisels 3 des erfindungsgemäßen Kreiselschwaders 2 kann optimal an Betriebsbedingungen angepasst werden, zum Beispiel an die zusammenzulegende Erntemasse und/oder an die Fortbewegungsgeschwindigkeit des Kreiselschwaders 2 und/oder an Schwingungen der Rechzinken 6 des Kreiselschwaders 2. Hiermit kann einerseits vermieden werden, dass infolge einer zu geringen Kreiselhöhe das Erntegut beim Zusammenlegen zum Schwad 9 verunreinigt wird, und dass andererseits infolge einer zu hohen Kreiselhöhe Erntegut auf dem Boden liegenbleibt und nicht zu einem Schwad 9 zusammengelegt wird.

### Bezugszeichenliste

- 1: Zugfahrzeug
- 2: Kreiselschwader
- 3: Schwadkreisel
- 4: Rech kreisel
- 5: Zinkenarm
- 6: Rechzinken
- 7: Fahrgestell
- 8: Laufrad
- 9: Schwad
- 10: Steuerungseinrichtung
- 11: Sensor
- 12: Sensor
- 13: Sensor
- 14: Sensor
- 15: Sensor

## Patentansprüche

1. Kreiselschwader (2), mit mindestens einem Schwadkreisel (3), der einen Rechkreisel (4) mit an Zinkenarmen (5) gelagerten Rechzinken (6) aufweist, und mit einer Steuerungseinrichtung (10), mit welcher eine Kreiselhöhe des oder jedes Schwadkreisels (3) abhängig von mindestens einer messtechnisch erfassten Größe im Betrieb automatisch einstellbar ist, **dadurch gekennzeichnet, dass** die Steuerungseinrichtung (10) dazu eingerichtet ist, die Kreiselhöhe des oder jedes Schwadkreisels abhängig von Schwingungen der Rechzinken (6) im Betrieb automatisch einzustellen, wobei im Bereich jedes Schwadkreisels (3) ein Sensor (15) verbaut ist, mit Hilfe dessen die Schwingungen der Rechzinken (6) des jeweiligen Schwadkreisels (3) im Betrieb messtechnisch erfassbar sind.

2. Kreiselschwader nach Anspruch 1, **dadurch gekennzeichnet, dass** die Steuerungseinrichtung (10) dazu eingerichtet ist, die Kreiselhöhe des oder jedes Schwadkreisels (3) mit zunehmenden Schwingungen der Rechzinken (6) des Kreiselschwaders zu erhöhen.

3. Kreiselschwader nach Anspruch 1 oder 2, **dadurch gekennzeichnet, dass** die Steuerungseinrichtung (10) dazu eingerichtet ist, die Kreiselhöhe des oder jedes Schwadkreisels (3) abhängig von der im Betrieb zu mindestens einem Schwad (9) zusammengelegten Erntemasse im Betrieb automatisch einzustellen.

4. Kreiselschwader nach Anspruch 3, **dadurch gekennzeichnet, dass** derselbe mindestens einen Sensor (11, 12) zur Bestimmung eines Schwadquerschnitts des oder jedes Schwads (9) und mindestens einen Sensor (13) zur Bestimmung einer Feuchtigkeit des Ernteguts aufweist, wobei die Steuerungseinrichtung (10) dazu eingerichtet ist, abhängig von dem oder jedem Schwadquerschnitt und abhängig von der Feuchtigkeit des Ernteguts die Kreiselhöhe des oder jedes Schwadkreisels (3) im Betrieb automatisch einzustellen.

5. Kreiselschwader nach Anspruch 4, **dadurch gekennzeichnet, dass** derselbe mindestens einen Winkelsensor (11) zur Bestimmung einer Schwadbreite des oder jedes Schwads (9) und mindestens einen Ultraschallsensor (12) zur Bestimmung einer Schwadhöhe des oder jedes Schwads (9) aufweist, wobei die Steuerungseinrichtung (10) dazu eingerichtet ist, abhängig von der oder jeder Schwadbreite und abhängig von der oder jeder Schwadhöhe die Kreiselhöhe des oder jedes Schwadkreisels (3) im Betrieb automatisch einzustellen.

6. Kreiselschwader nach Anspruch 4 oder 5, **dadurch gekennzeichnet, dass** in der Steuerungseinrichtung (10) mindestens ein Kennfeld hinterlegt ist, wobei die Steuerungseinrichtung (10) dazu eingerichtet ist, abhängig von der oder jeder Schwadbreite, abhängig von der oder jeder Schwadhöhe und abhängig von der Feuchtigkeit des Ernteguts die Kreiselhöhe des oder jedes Schwadkreisels (3) auf Grundlage des oder jedes Kennfelds im Betrieb automatisch einzustellen.

7. Kreiselschwader nach einem der Ansprüche 3 bis 6, **dadurch gekennzeichnet, dass** die Steuerungseinrichtung (10) dazu eingerichtet ist, die Kreiselhöhe des oder jedes Schwadkreisels (3) mit zunehmender Erntemasse zu verringern.

8. Kreiselschwader nach einem der Ansprüche 1 bis 7, **dadurch gekennzeichnet, dass** die Steuerungseinrichtung (10) dazu eingerichtet ist, die Kreiselhöhe des oder jedes Schwadkreisels (3) abhängig von einer Fortbewegungsgeschwindigkeit des Kreiselschwaders im Betrieb automatisch einzustellen.

9. Kreiselschwader nach Anspruch 8, **dadurch gekennzeichnet, dass** die Steuerungseinrichtung (10) dazu eingerichtet ist, die Kreiselhöhe des oder jedes Schwadkreisels (3) mit zunehmender Fortbewegungsgeschwindigkeit des Kreiselschwaders zu verringern.

10. Kreiselschwader nach Anspruch 8 oder 9, **dadurch gekennzeichnet, dass** derselbe mindestens einen Sensor (14) zur Bestimmung der Fortbewegungsgeschwindigkeit des Kreiselschwaders aufweist.

11. Verfahren zum Betreiben eines Kreiselschwaders nach einem oder mehreren der Ansprüche 1 bis 10, **dadurch gekennzeichnet, dass** die Kreiselhöhe des oder jedes Schwadkreisels abhängig von der im Betrieb zu mindestens einem Schwad zusammengelegten Erntemasse und/oder abhängig von einer Fortbewegungsgeschwindigkeit des Kreiselschwaders und abhängig von Schwingungen von Rechzinken im Betrieb automatisch eingestellt wird.

## Claims

1. Rotary swather (2), with at least one swath rotor (3) which has a rake rotor (4) with rake tines (6) mounted on tine arms (5), and with a control device (10) with which a rotor height of the or of each swath rotor (3) can be automatically adjusted during operation, depending on at least one parameter detected by technical measurement, **characterized in that** the control device (10) is set up to automatically adjust the rotor height of the or of each swath rotor during operation, depending on oscillations of the rake tines (6), wherein there is installed in the area of each swath rotor (3) a sensor (15) with the help of which the oscillations of the rake tines (6) of the respective swath rotor (3) can be detected by technical measurement during operation.

2. Rotary swather according to claim 1, **characterized in that** the control device (10) is set up to raise the rotor height of the or of each swath rotor (3) as oscillations of the rake tines (6) of the rotary swather increase.

3. Rotary swather according to claim 1 or 2, **characterized in that** the control device (10) is set up to automatically adjust the rotor height of the or of each swath rotor (3) during operation, depending on the quantity of harvested product combined into at least one swath (9) during operation.

4. Rotary swather according to claim 3, **characterized in that** it has at least one sensor (11, 12) to determine a swath cross-section of the or of each swath (9) and at least one sensor (13) to determine a moisture level of the crop, wherein the control device (10) is set up to automatically adjust the rotor height of the or of each swath rotor (3) during operation, depending on the or on each swath cross-section and depending on the moisture level of the crop.

5. Rotary swather according to claim 4, **characterized in that** it has at least one angle sensor (11) to determine a swath width of the or of each swath (9) and at least one ultrasonic sensor (12) to determine a swath height of the or of each swath (9), wherein the control device (10) is set up to automatically adjust the rotor height of the or of each swath rotor (3) during operation, depending on the or on each swath width and depending on the or on each swath height.

6. Rotary swather according to claim 4 or 5, **characterized in that** there is stored in the control device (10) at least one performance characteristic, wherein the control device (10) is set up to automatically adjust the rotor height of the or of each swath rotor (3) on the basis of the or of each performance characteristic during operation, depending on the or on each swath width, depending on the or on each swath height and depending on the moisture level of the crop.

7. Rotary swather according to one of claims 3 to 6, **characterized in that** the control device (10) is set up to lower the rotor height of the or of each swath rotor (3) as the quantity of harvested product increases.

8. Rotary swather according to one of claims 1 to 7, **characterized in that** the control device (10) is set up to automatically adjust the rotor height of the or of each swath rotor (3) during operation, depending on a travelling speed of the rotary swather.

9. Rotary swather according to claim 8, **characterized in that** the control device (10) is set up to lower the rotor height of the or of each swath rotor (3) as the travelling speed of the rotary swather increases.

10. Rotary swather according to claim 8 or 9, **characterized in that** it has at least one sensor (14) to determine the travelling speed of the rotary swather.

11. Method for operating a rotary swather according to one or more of claims 1 to 10, **characterized in that** the rotor height of the or of each swath rotor is automatically adjusted during operation, depending on the quantity of harvested product combined into at least one swath during operation and/or depending on a travelling speed of the rotary swather and depending on oscillations of rake tines.

## Revendications

1. Andaineur rotatif (2) comprenant au moins un rotor d'andainage (3) qui comporte un rotor de râtelage (4) avec des dents de râtelage (6) montées sur des bras porte-dents (5), et comprenant un équipement de commande (10) avec lequel une hauteur de rotor du ou de chaque rotor d'andainage (3) est réglable automatiquement lors du fonctionnement en fonction d'au moins une grandeur détectée par voie métrologique, **caractérisé en ce que** l'équipement de commande (10) est agencé pour régler automatiquement lors du fonctionnement la hauteur de rotor du ou de chaque rotor d'andainage en fonction d'oscillations des dents de râtelage (6), dans la zone de chaque rotor d'andainage (3) étant intégré un capteur (15) à l'aide duquel les oscillations des dents de râtelage (6) du rotor d'andainage (3) concerné sont détectables par voie métrologique lors du fonctionnement.

2. Andaineur rotatif selon la revendication 1, **caractérisé en ce que** l'équipement de commande (10) est agencé pour augmenter la hauteur de rotor du ou de chaque rotor d'andainage (3) à mesure que les oscillations des dents de râtelage (6) de l'andaineur rotatif augmentent.

3. Andaineur rotatif selon la revendication 1 ou 2, **caractérisé en ce que** l'équipement de commande (10) est agencé pour régler automatiquement lors du fonctionnement la hauteur de rotor du ou de chaque rotor d'andainage (3) en fonction d'une masse de récolte rassemblée en au moins un andain (9) lors du fonctionnement.

4. Andaineur rotatif selon la revendication 3, **caractérisé en ce qu'**il comporte au moins un capteur (11, 12) pour déterminer une section transversale d'andain du ou de chaque andain (9) et au moins un capteur (13) pour déterminer une humidité du produit de récolte, l'équipement de commande (10) étant agencé pour régler automatiquement lors du fonctionnement la hauteur de rotor du ou de chaque rotor d'andainage (3) en fonction du ou de chaque section transversale d'andain et en fonction de l'humidité du produit de récolte.

5. Andaineur rotatif selon la revendication 4, **caractérisé en ce qu'**il comporte au moins un capteur d'angle (11) pour déterminer une largeur d'andain du ou de chaque andain (9) et au moins un capteur à ultrasons (12) pour déterminer une hauteur d'andain du ou de chaque andain (9), l'équipement de commande (10) étant agencé pour régler automatiquement lors du fonctionnement la hauteur de rotor du ou de chaque rotor d'andainage (3) en fonction de la ou de chaque largeur d'andain et en fonction de la ou de chaque hauteur d'andain.

6. Andaineur rotatif selon la revendication 4 ou 5, **caractérisé en ce que** dans l'équipement de commande (10) est enregistré au moins un diagramme caractéristique, l'équipement de commande (10) étant agencé pour régler automatiquement lors du fonctionnement la hauteur de rotor du ou de chaque rotor d'andainage (3) sur la base du ou de chaque diagramme caractéristique en fonction de la ou de chaque largeur d'andain, en fonction de la ou de chaque hauteur d'andain et en fonction de l'humidité du produit de récolte.

7. Andaineur rotatif selon une des revendications 3 à 6, **caractérisé en ce que** l'équipement de commande (10) est agencé pour réduire la hauteur de rotor du ou de chaque rotor d'andainage (3) à mesure que la masse de récolte augmente.

8. Andaineur rotatif selon une des revendications 1 à 7, **caractérisé en ce que** l'équipement de commande (10) est agencé pour régler automatiquement lors du fonctionnement la hauteur de rotor du ou de chaque rotor d'andainage (3) en fonction d'une vitesse de marche de l'andaineur rotatif.

9. Andaineur rotatif selon la revendication 8, **caractérisé en ce que** l'équipement de commande (10) est agencé pour réduire la hauteur de rotor du ou de chaque rotor d'andainage (3) à mesure que la vitesse de marche de l'andaineur rotatif augmente.

10. Andaineur rotatif selon la revendication 8 ou 9, **caractérisé en ce qu'**il comporte au moins un capteur (14) pour déterminer la vitesse de marche de l'andaineur rotatif.

11. Procédé d'exploitation d'un andaineur rotatif selon une ou plusieurs des revendications 1 à 10, **caractérisé en ce que** la hauteur de rotor du ou de chaque rotor d'andainage est réglable automatiquement lors du fonctionnement en fonction de la masse de récolte rassemblée lors du fonctionnement en au moins un andain et/ou en fonction d'une vitesse de marche de l'andaineur rotatif et en fonction d'oscillations de dents de râtelage.
